(19) Europäisches Patentamt
European Patent Office
Office européen des brevets

(11) Veröffentlichungsnummer: **0 162 210**
**B1**

# (12) EUROPÄISCHE PATENTSCHRIFT

(45) Veröffentlichungstag der Patentschrift: **07.10.87**

(51) Int. Cl.⁴: **C 08 G 75/02**

(21) Anmeldenummer: **85102798.7**

(22) Anmeldetag: **12.03.85**

(54) **Verfahren zur Herstellung von hochmolekularen, gegebenenfalls verzweigten Polyarylensulfiden.**

(30) Priorität: **23.03.84 DE 3410642**

(43) Veröffentlichungstag der Anmeldung: **27.11.85 Patentblatt 85/48**

(45) Bekanntmachung des Hinweises auf die Patenterteilung: **07.10.87 Patentblatt 87/41**

(84) Benannte Vertragsstaaten: **DE FR GB IT**

(56) Entgegenhaltungen:
**EP - A - 0 065 689**
**EP - A - 0 073 526**
**EP - A - 0 109 637**
**US - A - 4 056 515**
**US - A - 4 066 632**

(73) Patentinhaber: **BAYER AG, Konzernverwaltung RP Patentabteilung, D-5090 Leverkusen 1 Bayerwerk (DE)**

(72) Erfinder: **Ostlinning, Edgar, Dr., Rembrandtstrasse 37, D-4000 Düsseldorf (DE)**
Erfinder: **Idel, Karsten, Dr., Scheibler Strasse 81, D-4150 Krefeld (DE)**
Erfinder: **Eisermann, Wolfgang Michael, Dr., An den Kämpen 25, D-4000 Düsseldorf 31 (DE)**
Erfinder: **Freitag, Dieter, Dr., Hasenheide 10, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren zur Herstellung von hochmolekularen, gegebenenfalls verzweigten Polyarylensulfiden. Diese können in einem polaren organischen Lösungsmittel in Abwesenheit von Wasser in einer Reaktionskesselkaskade mit zwei bis sechs Reaktionskesseln hergestellt werden.

Polyarylensulfide und ihre Herstellung sind bekannt (siehe beispielsweise US-PS 2 513 188, 3 790 536, 3 839 301, 4 038 259, 4 038 260, 4 038 261, 4 038 262, 4 056 515, 4 060 520, 4 064 114, DE-AS 2 453 485, 2 453 749, 2 623 333, 2 623 362, 2 623 363, DE-OS 2 930 710, 2 930 797, 3 019 732, 3 030 488).

Auch kontinuierliche Verfahren sind beschrieben (siehe beispielsweise US-PS 4 056 515, 4 060 520, 4 066 632, DE-OS 3 123 628).

All diese Verfahren setzen wasserhaltige Ausgangsstoffe ein, die vor der Umsetzung in einem extra Reaktionsschritt zumindest teilweise entwässert werden müssen.

So werden z.B. im Verfahren der DE-OS 3 030 488 Alkalisulfide eingesetzt, die einen Wassergehalt von 1 bis 2,4 Mol Wasser pro Mol Alkalisulfid haben. Gemäss den US-Patenten 4 056 515 und 4 060 520 verbleiben in den Reaktionsgemischen nach der Vorentwässerung Wassergehalte von mindestens 1 Mol pro Mol S-Spender. In der US-PS 4 282 347 wird nach dem Entwässerungsschritt Wasser zum Reaktionsgemisch gegeben, um einen bestimmten Wassergehalt einzustellen.

Als besonders vorteilhaft wird es bei all diesen Verfahren angesehen, dass bei der Entwässerung nicht alle Reaktionspartner anwesend sind. Insbesondere werden die Halogenaromaten mit Teilen des Lösungsmittels erst nach einer Vorentwässerung zugesetzt.

Jedoch ist auch die stufenweise Entwässerung während der Reaktion möglich. Aufgrund der hohen Reaktionstemperatur (bis zu 280°C) und den damit verbundenen Drücken (bis zu 20 bar) können diese Umsetzungen nur in aufwendigen Druckapparaturen durchgeführt werden.

Demgegenüber wurde nun ein Verfahren gefunden, nach dem hochmolekulare, gegebenenfalls verzweigte Polyarylensulfide hergestellt werden können, das bei nur geringem Überdruck oder bei Normaldruck durchgeführt wird, so dass ohne Druckapparatur gearbeitet werden kann. Hierbei werden von Anfang an alle Umsetzungskomponenten, einschliesslich aller eventuell eingesetzten Katalysatoren und/oder Cosolventien zusammen vorgelegt oder die zu entwässernde Substanz im Masse der Entwässerung eingetragen, und Wasser destillativ aus dem Ansatz entfernt. Eventuell azeotrop mit destillierende Reaktionskomponenten werden von Wasser getrennt und zurückgeführt. Das Reaktionsgemisch wird darauf in den einzelnen Reaktionskesseln bei steigenden Temperaturen zur Reaktion gebracht.

Gegenstand der Erfindung ist ein Verfahren zur Herstellung von gegebenenfalls verzweigten Polyarylensulfiden aus

a) 50-100 Mol-% Dihalogenaromaten der Formel

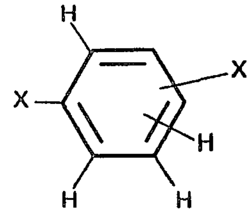

I,

und 0-50 Mol-% Dihalogenaromaten der Formel

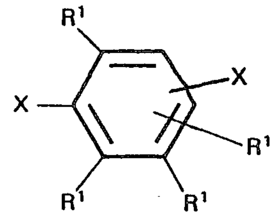

II,

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bevorzugt 0,1 bis 2,5 Mol-%, bezogen auf die Summe der Dihalogenaromaten der Formel I und II, eines Tri- oder Tetrahalogenaromaten der Formel

$$ArX_n \qquad (III),$$

wobei

Ar ein aromatischer oder heterocyclischer Rest ist

X für Halogen wie Chlor oder Brom steht und

n für die Zahl 3 oder 4 steht und

c) Alkalisulfiden, bevorzugt Natrium- oder Kaliumsulfid oder deren Mischung, in Form ihrer Hydrate oder wässrigen Mischungen, gegebenenfalls zusammen mit Alkalihydroxiden wie Natrium- und Kaliumhydroxid, wobei das molare Verhältnis von (a+b):c im Bereich von 0,85:1 bis 1,15:1, vorzugsweise 0,90:1 bis 1,10:1, liegt in

d) N-methylcaprolactam als organischem Lösungsmittel, gegebenenfalls unter Mitverwendung von Katalysatoren und/oder Cosolventien,

wobei das molare Verhältnis von Alkalisulfiden c) zu dem organischen Lösungsmittel d) im Bereich von 1:2 bis 1:15 liegt bei einer Temperatur von 200 bis 270°C, das dadurch gekennzeichnet ist, dass die gegebenenfalls kontinuierliche Umsetzung in einer Kesselkaskade mit 2 bis 6, vorzugsweise 2 bis 4, Kesseln gegebenenfalls unter erhöhtem Druck von 0,1 bis 4 bar in der Weise erfolgt, dass das im Ansatz befindliche Wasser vor der Reaktion, bzw. in der Primärphase der Reaktion in Anwesenheit aller Reaktionsteilnehmer entfernt wird und die Reaktionstemperatur

200 bis 270°C, vorzugsweise 200 bis 250°C, beträgt und über die einzelnen Reaktionskessel kontinuierlich gesteigert wird.

Die Reaktionszeit kann innerhalb einer weiten Spanne variiert werden. Sie kann von weniger als einer Stunde bis zu mehreren Tagen, vorzugsweise von 1 Stunde bis zu 48 Stunden, besonders bevorzugt 2 bis 18 Stunden, betragen. Die Verweildauer der Umsetzungsmischung in den einzelnen Kesseln kann gleichmässig verteilt oder unterschiedlich sein.

Als Katalysatoren können für diesen Zweck übliche Substanzen in üblichen Mengen eingesetzt werden, beispielsweise Alkalifluoride, Alkaliphosphate und Alkalicarboxylate. Es werden pro Mol Alkalisulfid 0,02 bis 1,0 Mol Katalysator eingesetzt.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1,0 Mol, bezogen auf 1 Mol Alkalisulfid, eingesetzt werden, z.B. N,N-Dimethylacetamid, N,N-Diethylacetamid, N,N-Dimethylpropionamid.

$R^1$ steht in Formel II vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin können zwei zueinander orthoständige Reste $R^1$ einen ankondensierten aromatischen Ring mit insgesamt 6 C-Atomen oder einen ankondensierten heterocyclischen Ring mit 5 bis 6 Ringatomen und 1 bis 3 Heteroatomen wie N, O und S bilden.

Ar steht vorzugsweise für einen aromatischen Rest mit 6 bis 24 C-Atomen oder heterocyclischen Rest mit 6 bis 24 C-Atomen, besonders bevorzugt für einen aromatischen Rest mit 6 bis 10 C-Atomen oder heterocyclischen Rest mit 6 bis 10 Ringatomen, wobei die heterocyclischen Reste bis zu 3 Heteroatome wie N, S, O enthalten können.

Erfindungsgemäss können meta- und para-Dihalogenaromaten der Formel (I) bzw. (II) eingesetzt werden. In diesem Fall kann das Verhältnis meta- zu para-Dihalogenaromaten bis zu 30:70 betragen.

Zur Erhaltung von thermoplastisch verarbeitbaren Polyphenylensulfiden werden besonders bevorzugt p-Dihalogenaromaten eingesetzt.

Sollen verzweigte Polyarylensulfide hergestellt werden, können mindestens 0,05 Mol.-% eines Tri- oder Tetrahalogenaromaten der Formel (III) eingesetzt werden.

Alkalisulfide werden in üblichen Mengen und in üblicher Weise eingesetzt. Z.B. sind Natrium- und Kaliumsulfid geeignet. Es können Alkalisulfide eingesetzt werden, die aus Hydrogensulfiden mit Alkalihydroxiden wie LiOH, NaOH und KOH regeneriert werden. In jedem Fall können Mischungen sowohl der Sulfide als auch der Hydroxide eingesetzt werden.

Beispiele für erfindungsgemäss einzusetzende Dihalogenaromaten der Formel (I) sind:

p-Dichlorbenzol, p-Dibrombenzol, 1-Chlor-4-brombenzol, 1,3-Dichlorbenzol, 1,3-Dibrombenzol, und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäss einzusetzende Dihalogenaromaten der Formel (II) sind:

2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäss einzusetzende Tri- bzw. Tetrahalogenaromaten der Formel (III) sind:

1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Erfindungsgemäss wird als organisches Lösungsmittel N-Methylcaprolactam verwendet.

Der Siedepunkt der Lösungsmittel sollte bei 200°C und darüber liegen.

Die Umsetzung wird im allgemeinen drucklos bei Atmosphärendruck durchgeführt. Eine Anwendung von Überdruck von 0,1 bar bis 4 bar kann in besonderen Fällen von Vorteil sein. Auch ist es möglich in jedem Kessel den gleichen Druck zu haben, also die ganze Kaskade isobar zu betreiben. Es ist auch möglich unterschiedliche Drücke in den einzelnen Kesseln einzustellen.

Bei der Durchführung des erfindungsgemässen Verfahrens können in die ersten Reaktionskessel der Kesselkaskade (Entwässerungskessel) alle Komponenten der Umsetzung in beliebiger Reihenfolge auf einmal zusammengegeben werden. Es ist auch möglich, wasserhaltige Komponenten während der Entwässerungsphase zuzudosieren. Die Entwässerung findet im allgemeinen bei Temperaturen von 160°C bis 210°C, gegebenenfalls durch Anlegen eines leichten Vakuums von $>0,7$ bar, statt, das die Abtrennung kleinerer Restmengen Wasser erleichtern kann. Die Temperaturen in den einzelnen Kesseln der Kaskade können unterschiedlich sein. Im allgemeinen können die Temperaturen so gewählt werden, dass sich die Temperaturen in den Kesseln von Stufe zu Stufe um 5 bis 30°C unterscheiden. Zum Erreichen bestimmter Temperaturen kann im jeweiligen Kessel ein bestimmter Druck eingestellt werden.

Im 1. Reaktionskessel wird eine Temperatur von 160°C bis 210°C eingestellt. Auch eine langsam ansteigende Temperatur im Kessel ist möglich. Der Eintrag in die nächsten 4 Reaktionskessel, bei Verwendung einer Kesselkaskade von mindestens fünf Kesseln, kann kontinuierlich (steady state) erfolgen, oder in grösseren Portionen in entsprechend grösseren Zeitabständen. Je nach Anzahl der Reaktionskessel können verschiedene Temperaturbereiche je Kessel eingestellt werden, beispielsweise bei Verwendung einer Kaskade von

Fahrweise 1. Kessel 2. Kessel 3. Kessel 4.Kessel 5. Kessel 6. Kessel

| | | | | | | |
|---|---|---|---|---|---|---|
| 2 Kesseln | 160-220°C | 220-250°C | | | | |
| 3 Kesseln | 160-210°C | 215-230°C | 230-250°C | | | |
| 4 Kesseln | 160-210°C | 210-225°C | 225-235°C | 230-250°C | | |
| 5 Kesseln | 160-210°C | 210-220°C | 220-235°C | 230-240°C | 235-250°C | |
| 6 Kesseln | 160-210°C | 210-220°C | 220-230°C | 225-235°C | 230-240°C | 235-250°C. |

Die Verweilzeit in einem Kessel hängt von der Reaktionsgeschwindigkeit in den jeweiligen Temperaturbereichen ab und kann gleich oder verschieden sein, sie beträgt bis zu 24 Stunden, vorzugsweise zwischen 1 und 10 Stunden. Die gesamte Reaktionszeit beträgt bis zu 48 Stunden, vorzugsweise 2 bis 18 Stunden.

Die Umsetzung in der Kasselkaskade kann kontinuierlich oder diskontinuierlich ausgeführt werden.

Die Aufarbeitung des Umsetzungsgemisches und die Isolierung der Polyarylensulfide kann in bekannter Weise erfolgen.

Das Polyarylensulfid kann direkt aus der Umsetzungslösung oder erst z.B. nach Zugabe von Wasser und/oder verdünnten Säuren, nach üblichen Verfahrensweisen abgetrennt werden, beispielsweise durch Filtration oder durch Zentrifugieren. Nach der Abtrennung des Polyarylensulfids schliesst sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschliessende Wäsche, wie oben beschrieben, gewonnen werden.

Die Aufarbeitung ist sowohl kontinuierlich als auch diskontinuierlich möglich.

Die erfindungsgemässen Polyarylensulfide können mit anderen Polymeren, Pigmenten und Füllstoffen, beispielsweise Graphit, Metallpulver, Glaspulver, Quarzmehl oder Glasfasern gemischt oder mit den für Polyarylensulfiden üblichen Additiven, beispielsweise üblichen Stabilisatoren oder Entformungsmitteln, versetzt werden.

Im allgemeinen wird das Schmelzfliessverhalten von Polyarylensulfiden nach ASTM 1238-70 bei 316°C unter Verwendung eines 5 kg-Gewichtes gemessen und in g/10 Minuten angegeben.

Bei hohen Schmelzflusswerten kann diese Messung jedoch aufgrund der hohen Ausflussrate der Polymerschmelze Schwierigkeiten bereiten.

Es wurde deshalb die Schmelzviskosität $\eta$ m der Polymerschmelze (in Pa·s) bei 306°C in Abhängigkeit von der Schubspannung (in Pa·s) mit Hilfe des Instron-Rotationsviskosimeters bestimmt.

Man kann auf diese Weise die Schmelzviskosität in einem sehr weiten Bereich von $10^{-1}$ bis $10^7$ Pa·s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Scmelzviskosität in Abhängigkeit von der Schubspannung errechnet werden. Verwendet wurde das Rheometer Modell 3250 der Fa. Instron; Durchmesser des Kegels und der Platte 2 cm.

Angegeben wird die Schmelzviskosität, die bei einer Schubspannung von $\tau = 10^2$ Pa gemessen wird.

Die erfindungsgemässen Polyarylensulfide besitzen direkt nach der Isolierung aus dem Reaktionsgemisch im allgemeinen Schmelzviskositäten von $0{,}1 \times 10^2$ bis $5 \cdot 10^6$ Pa·s, vorzugsweise von $0{,}2 \times 10^3$ bis $10^4$ Pa·s und gute farbliche Eigenschaften. Sie können direkt durch Extrusion, Extrusionsblasen, Spritzgiessen oder sonst übliche Verarbeitungstechniken zu Folien, Formkörpern oder Fasern verarbeitet werden. Diese können in üblicher Weise Verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile.

*Beispiel 1*

Verwendung einer Apparatur mit 2 Reaktionskesseln.

In einem 4 l-Kessel, der mit Thermometer, Rührer, Kolonne mit Destillatteiler und Bodenablass ausgerüstet ist, werden unter Stickstoff 2000 g N-Methylcaprolactam, 616,5 g Natriumsulfidtrihydrat (≙ 4,73 Mol), 56 g 50%ige Natronlauge, 682,2 g 1,4-Dichlorbenzol (≙ 4,64 Mol) 4,21 g Trichlorbenzol (0,5 Mol-% bezogen auf Dichlorbenzol) und 60,4 g N,N-Dimethylacetamid vorgelegt. Das Gemisch wird langsam zum Sieden erhitzt. Aus dem destillierenden Azeotrop, bestehend aus Wasser und 1,4--Dichlorbenzol, wird Wasser abgetrennt und 1,4--Dichlorbenzol in das Reaktionsgefäss zurückgeführt. Nach 2 Stunden Destillationszeit am Ende mit leichtem Vakuum ist sowohl im Destillat als auch im Sumpf kein Wasser mehr nachweisbar. Anschliessend wird das Reaktionsgemisch auf 190°C temperiert. In einem 2. Kessel werden 400 g N-Methylcaprolactam vorgelegt und auf 230°C vorgeheizt. Die Reaktionsmischung aus Kessel 1 wird anschliessend bei Temperaturen von 225°C bis 230°C kontinuierlich in Kessel 2 eindosiert. Anschliessend wird das Umsetzungsgemisch weitere 7 Stunden zum Rückfluss erhitzt und das Produkt in üblicher Weise isoliert. Man erhält 481,1 g Polyarylensulfid (≙ 96,0% Ausbeute bezogen auf 1,4-Dichlorbenzol) mit einer Schmelzviskosität von $\eta$ m $= 3{,}8 \times 10^2$ Pa·s (bei $\tau = 10^2$ Pa).

*Beispiel 2*

Verwendung einer Apparatur mit 4 Kesseln

Apparatur analog Beispiel 1.

2000 g N-methylcaprolactam, 616,5 g Natriumsulfidtrihydrat, 682,2 g 1,4-Dichlorbenzol, 76,1 g Natriumacetat und 4,9 g 50%ige Natronlauge werden im 1. Kessel vorgelegt und wie in Beispiel 1 entwässert. Anschliessend wird auf 190°C temperiert. Im 2. Kessel werden 150 g N-Methylcaprolactam

vorgelegt und auf 225°C erwärmt. Die Reaktionsmischung wird nun portionsweise so zudosiert, dass die Temperatur von 215 bis 220°C gehalten werden kann. Anschliessend verbleibt das Umsetzungsgemisch 3 Stunden bei 220°C. Im 3. Kessel werden 150 g N-Methylcaprolactam auf 230°C aufgeheizt und der Inhalt aus Kessel 2 so zugegeben, dass eine Temperatur von 225°C bis 230°C gehalten werden kann. Anschliessend wird 3 Stunden am Rückfluss erhitzt, wobei die Temperatur bis auf 235°C ansteigen kann. Im 4. Kessel werden 100 g N-Methylcaprolactam vorgelegt und zum Rückfluss erhitzt. Bei Temperaturen von ca. 230-235°C wird der Inhalt des 3. Kessels eindosiert. Anschliessend wird 4 Stunden am Rückfluss erhitzt. Man erhält 473,5 g Polyphenylensulfid (≙ 94,5% Ausbeute bezogen auf 1,4-Dichlorbenzol) mit einer Schmelzviskosität von $\eta$ m = 140 Pa·s (bei $\tau$ = $10^2$ Pa).

*Beispiel 3*

Verwendung einer Apparatur mit 6 Kesseln

Apparatur analog Beispiel 2 jedoch mit folgenden Änderungen:

| Kessel-Nr. | Dosierungs-temp. | Halte-temp. | Vorlage NMC* | Stunden |
|---|---|---|---|---|
| 1 | — | 205°C | — | |
| 2 | 210-215°C | 215°C | 100 g | 3 |
| 3 | 220-225°C | 225°C | 100 g | 3 |
| 4 | 225-230°C | 230°C | 100 g | 2 |
| 5 | 230-235°C | 235°C | 100 g | 3 |
| 6 | 235°C | RF** | — | 2 |

* NMC = N-Methylcaprolactam
** RF = Rückfluss.

Einwaage wie in Beispiel 1. Man erhält 473,7 g Polyarylensulfid (≙ 94,5% Ausbeute bezogen auf 1,4-Dichlorbenzol) mit einer Schmelzviskosität von $\eta$m = 590 Pa·s (bei $\tau$ = 102 Pa).

*Beispiel 4*

Verwendung einer Apparatur mit 4 Kesseln in steady-state Arbeitweise. Kessel 2 bis 4 sind zusätzlich mit Überdruckregelung zur Temperatureinstellung versehen. Kessel 1 ist zweifach installiert.

| Kessel-Nr. | Temperatur | Druck | Reaktions-gemisch |
|---|---|---|---|
| 1a | 200°C | 1 bar | Einwaage (oder umgekehrt) |
| 1b | Ent-wässerung | | |
| 2 | 220°C | 1-1,4 bar | 3000 g |
| 3 | 230°C | 1-1,8 bar | 3000 g |
| 4 | 240°C | 1-1,5 bar | 4000 g |

Einwaage wie in Beispiel 2, jedoch zusätzlich 400 g N-Methylcaprolactam und 7,16 g 1,2,4-Trichlorbenzol (0,85 Mol-% bezogen auf 1,4-Dichlorbenzol). Der Durchsatz von Kessel 1 nach 2, 2 nach 3 und 3 nach 4 beträgt 1000 g.

Bei kontinuierlichem Durchsatz erhält man in 1 h 136,3 g Polyarylensulfid (≙ 96,1% Ausbeute bezogen auf 1,4-Dichlorbenzol) mit einer Schmelzviskosität von $\eta$ m 3 × $10^3$ Pa·s (bei $\tau$ = $10^2$ Pa).

Um diesen kontinuierlichen Durchsatz gewährleisten zu können, wird wechselweise in den Kesseln 1a oder 1b entwässert bzw. auf 200°C temperiert.

*Beispiel 5*

Wie Beispiel 4, jedoch Durchsatz von 1000 g/h in 10 Portionen à 100 g.

Man erhält 125,9 g Polyarylensulfid (≙ 95,8% Ausbeute bezogen auf 1,4-Dichlorbenzol mit einer Schmelzviskosität von $\eta$ m = 9,8 × $10^2$ Pa·s (bei $\tau$ = $10^2$ Pa).

**Patentansprüche**

1. Verfahren zur Herstellung von hochmolekularen, gegebenenfalls verzweigten Polyarylensulfiden aus

a) 50-100 Mol-% Dihalogenaromaten der Formel

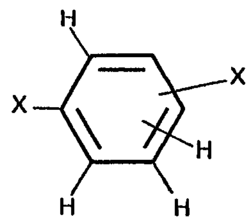

(I)

und 0-50 Mol-% Dihalogenaromaten der Formel

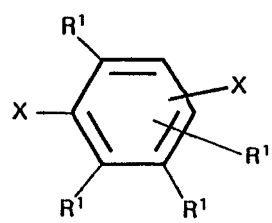

(II),

in denen

X für zueinander meta- oder para-ständiges Halogen steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bezogen auf die Summe der Komponenten a) und b) eines Tri- oder Tetrahalogenaromaten der Formel

$$ArX_n \quad (III),$$

wobei

Ar ein aromatischer oder heterocyclischer Rest ist,
X für Halogen steht und
n 3 oder 4 ist und

c) Alkalisulfiden in Form ihrer Hydrate oder wässrigen Mischungen, gegebenenfalls zusammen mit Alkalihydroxiden, wobei das molare Verhältnis von (a+b):c im Bereich von 0,85 : 1 bis 1,15 : 1 liegt und

d) in N-Methylcaprolactam als organischem Lösungsmittel, gegebenenfalls unter Mitverwendung von Katalysatoren und/oder Cosolventien, wobei das molare Verhältnis von Alkalisulfiden c) zu den organischen Lösungsmitteln d) im Bereich von 1 : 2 bis 1 : 15 liegt, bei einer Temperatur von 200 bis 270°C, dadurch gekennzeichnet, dass die gegebenenfalls kontinuierliche Umsetzung in einer Kesselkaskade mit 2 bis 6 Kessekn, gegebenenfalls unter erhöhtem Druck von 0,1 bis 4 bar in der Weise erfolgt, dass das im Ansatz befindliche Wasser vor der Reaktion, bzw. in der Primärphase der Reaktion in Anwesenheit aller Reaktionsteilnehmer entfernt und die Reaktionstemperatur anschliessend über die einzelnen Reaktionskessel kontinuierlich gesteigert wird.

2. Verfahren nach Anspruch 1, dadurch gekennzeichnet, dass bei der Umsetzung Temperaturen von 200°C bis 250°C, angewendet werden.
3. Verfahren nach Anspruch 1, dadurch gekennzeichnet, dass die Reaktionstemperaturen von Kessel zu Kessel gesteigert werden, wobei sich die Temperaturen von Stufe zu Stufe um 5 bis 30°C unterscheiden.
4. Verfahren nach Anspruch 1, dadurch gekennzeichnet, dass zur Einstellung bestimmter Temperaturen leichter Überdruck angewendet wird.
5. Verfahren nach Anspruch 1, dadurch gekennzeichnet, dass die Dosierung von einem Kessel in den anderen kontinuierlich erfolgt.
6. Verfahren nach Anspruch 1, dadurch gekennzeichnet, dass man Alkalicarboxylate als Katalysatoren einsetzt.
7. Verfahren nach Anspruch 1, dadurch gekennzeichnet, dass man N,N-Dialkylcarbonsäureamide als Cosolventien einsetzt.
8. Verfahren nach Anspruch 1, dadurch gekennzeichnet, dass 1,4-Dichlorbenzol als Dihalogenaromat der Formel I eingesetzt wird.
9. Verfahren nach Anspruch 1, dadurch gekennzeichnet, dass 1,2,4-Trichlorbenzol als Polyhalogenaromat der Formel III eingesetzt wird.

## Claims

1. Process for the production of high molecular weight, optionally branched polyarylene sulphides from

a) 50-100 mol % of aromatic dihalogen compounds of the formula

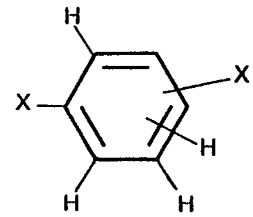

(I)

and 0-50 mol % of aromatic dihalogen compounds of the formula

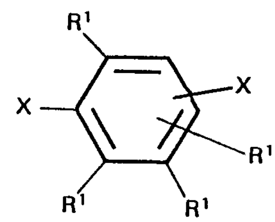

(II)

in which

X represents halogen in a meta- or para-position to each other and
$R^1$ is identical or different and can be hydrogen, alkyl, cycloalkyl, aryl, alkylaryl or arylalkyl, it being possible for two radicals $R^1$ which are in an ortho-position to each other to be linked to form an aromatic or heterocyclic ring and one radical $R^1$ is always different from hydrogen and

b) 0 to 5 mol %, based on the sum of components a) and b) of an aromatic tri- or tetrahalogen compound of the formula

$$ArX_n \qquad (III),$$

wherein

Ar is an aromatic or heterocyclic radical,
X represents halogen and
n is 3 or 4 and

c) alkali metal sulphides, in the form of their hydrates or aqueous mixtures, optionally together with alkali metal hydroxides, the molar ratio of (a+b):c being in the range from 0.85 : 1 to 1.15 : 1 and

d) in N-methylcaprolactam as the organic solvent, optionally with the simultaneous use of catalysts and/or cosolvents, the molar ratio of alkali metal sulphides c) to the organic solvents d) being in the range from 1 : 2 to 1 : 15, at a temperature of 200 to 270°C, characterised in that the optionally continuous reaction is carried out in a vessel cascade with 2 to 6 vessels, optionally under an elevated pressure of 0.1 to 4 bars, in such a manner that the water present in the starting mixture is removed prior to the reaction or in the primary phase of the reaction, in the presence of all the reactants, and the reaction temperature is then increased continuously over the individual reaction vessels.

2. Process according to Claim 1, characterised in that temperatures of 200 °C to 250 °C are used in the reaction.

3. Process according to Claim 1, characterised in that the reaction temperatures are increased from vessel to vessel, the temperatures differing from stage to stage by 5 to 30°C.

4. Process according to Claim 1, characterised in that a slight excess pressure is used for setting specific temperatures.

5. Process according to Claim 1, characterised in that metering is carried out continuously from one vessel into the other.

6. Process according to Claim 1, characterised in that alkali metal carboxylates are used as the catalysts.

7. Process according to Claim 1, characterised in that N,N-dialkylcarboxylic acid amides are used as the cosolvents.

8. Process according to Claim 1, characterised in that 1,4-dichlorobenzene is used as the aromatic dihalogen compound of the formula I.

9. Process according to Claim 1, characterised in that 1,2,4-trichlorobenzene is used as the aromatic polyhalogen compound of the formula III.

**Revendications:**

1. Procédé pour préparer des sulfures de polyarylènes à poids moléculaire élevé, éventuellement ramifiés, à partir de:

a) 50 à 100 moles % d'hydrocarbures dihalogénoaromatiques de formule:

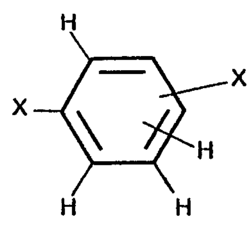

(I)

et de 0 à 50 moles % d'hydrocarbures dihalogénoaromatiques de formule:

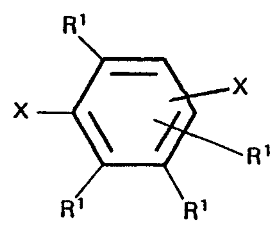

(II)

dans lesquelles: les

X représentent chacun un atome d'halogène situés en méta ou en para l'un par rapport à l'autre, et les symboles

$R^1$ sont identiques ou différents et peuvent représenter chacun un atome d'hydrogène, un reste alkyle, cycloalkyle, aryle, alkylaryle, arylalkyle, deux restes $R^1$ situés en ortho l'un par rapport à l'autre pouvant être reliés pour former un noyau aromatique ou hétérocyclique, et un reste $R^1$ étant toujours différent de l'hydrogène, et

b) 0 à 5 moles %, sur la base de la somme des composants a) et b) d'un hydrocarbure trihalogéno- ou tétra-halogénoaromatique de formule:

$$ArX_n \quad (III)$$

dans laquelle:

Ar représente un reste aromatique ou hétérocyclique,

X représente un halogène, et

n vaut 3 ou 4, et

c) des sulfures alcalins, sous forme de leurs hydrates ou de mélanges aqueux, éventuellement avec des hydroxydes alcalins, le rapport molaire de (a+b):c se situant dans l'intervalle allant de 0,85 : 1 à 1,15 : 1, et

d) dans du N-méthylcaprolactame comme solvant organique, éventuellement avec utilisation simultanée de catalyseurs et/ou de cosolvants, le rapport molaire des sulfures alcalins c) aux solvants organiques d) se situant dans l'intervalle compris entre 1 : 2 et 1 : 15, à une température de 200 à 270°C, procédé caractérisé en ce qu'on effectue la réaction, éventuellement en continu, dans une cascade de récipients comportant 2 à 6 récipients, éventuellement sous une surpression élevée de 0,1 à 4 bars, de façon à enlever avant la réaction ou dans la phase primaire de la réaction, en présence de tous les corps participant à cette réaction, l'eau se trouvant dans la charge et à élever ensuite en continu la température de réaction dans les divers réacteurs individuels.

2. Procédé selon la revendication 1, caractérisé en ce qu'on applique lors de la réaction des températures de 200°C à 250°C.

3. Procédé selon la revendication 1, caractérisé en ce qu'on augmente d'un récipient à l'autre les températures de réaction, les températures différant de 5 à 30°C d'un étage à l'autre.

4. Procédé selon la revendication 1, caractérisé en ce que, pour régler à des températures déterminées, on applique une légère surpression.

5. Procédé selon la revendication 1, caractérisé en ce que l'introduction dosée s'effectue en continu d'un récipient dans l'autre.

6. Procédé selon la revendication 1, caractérisé en ce qu'on utilise des carboxylates alcalins comme catalyseurs.

7. Procédé selon la revendication 1, caractérisé en ce qu'on utilise des N,N-dialkylcarboxamides comme cosolvants.

8. Procédé selon la revendication 1, caractérisé en ce qu'on utilise le 1,4-dichlorobenzène comme hydrocarbure dihalogéné de formule I.

9. Procédé selon la revendication 1, caractérisé en ce qu'on utilise le 1,2,4-trichlorobenzène comme hydrocarbure aromatique polyhalogéné répondant à la formule III.